# EUROPEAN PATENT APPLICATION

(11) **EP 4 708 442 A1**
(43) Date of publication of application: **11.03.2026**
(21) Application number: 24844701.3
(22) Date of filing: 19.07.2024
(51) Int. Cl.: H01M 10/0568, H01M 10/0567, H01M 10/42, H01M 10/0525

(54) **ELECTROLYTE AND BATTERY**

(30) Priority: 27.07.2023 CN 202310932718
(71) Applicant: Guangzhou Tinci Materials Technology Co., Ltd., Guangzhou, Guangdong 510760 (CN); Jiujiang Tinci Materials Technology Co., Ltd., Jiujiang, Jiangxi 332500 (CN)
(72) Inventor: XIONG, Hanli, Guangzhou, Guangdong 510700 (CN); SUN, Wenpo, Guangzhou, Guangdong 510700 (CN); XIE, Tian, Guangzhou, Guangdong 510700 (CN)
(74) Representative: IPAZ
(86) International application number: PCT/CN2024/106306
(87) International publication number: WO 2025/021009

(57) **Abstract**

An electrolytic solution and a battery. The electrolytic solution includes a first lithium salt, a second lithium salt and a first additive, the first lithium salt at least including lithium bis(fluorosulfonyl)imide, the second lithium salt being selected from at least one of lithium difluoro(oxalato)borate, or lithium difluoro(bisoxalato)phosphate, and the first additive being methylene methanedisulfonate. On the basis of the electrolytic solution including the first lithium salt and the second lithium salt, the first additive, i.e. methylene methanedisulfonate (MMDS), is further added in the electrolytic solution; the second lithium salt helps to improve the cycling stability and high-temperature storage performance of batteries, and the first additive helps to improve the oxidation resistance of the second lithium salt under high voltages, so as to further modify the composition and structure of SEI films, thus reducing the impedance of SEI films, improving the stability of SEI films, and improving the cycle performance and high-temperature storage performance of batteries.

## Description

The present application claims the priority to the Chinese Patent Application No. 202310932718.3, filed before the China National Intellectual Property Administration on July 27, 2023, titled "ELECTROLYTIC SOLUTION AND BATTERY", which is incorporated herein by reference in its entirety.

### TECHNICAL FIELD

The present application relates to an electrolytic solution and a battery, and relates to the technical field of batteries.

### BACKGROUND

With the wide application of batteries in new energy vehicles, electronic devices and other fields, the improvement of battery performance has also received extensive attention. As one of the important components of batteries, electrolytic solutions play a crucial role in the performance of batteries. Electrolytic solutions mainly include organic solvents and lithium salts dissolved in organic solvents. Lithium hexafluorophosphate (LiPF₆) is the most widely used lithium salt for electrolytic solutions at present because of its high conductivity and safety. However, compared with LiPF₆, lithium bis(fluorosulfonyl)imide (LiFSI) has advantages in terms of solubility, ionic conductivity and thermal stability. Nevertheless, FSI⁻ anions are prone to decomposition during the preparation and purification of LiFSI, generating impurities. Meanwhile, it is difficult and costly to remove the impurities. Moreover, trace amounts of impurities will corrode the current collector at high voltage, limiting its application in batteries.

Adding additives such as lithium difluoro(oxalato)borate (LiODFB) and lithium difluorobis(oxalato)phosphate (LiODFP) to the electrolytic solution is helpful to inhibit the corrosion of the current collector by LiFSI, form a solid electrolyte interface (SEI) film with low impedance, and improve the cycling stability and high-temperature storage performance of the battery. However, the oxidation resistance of these additives at high potential is insufficient, which affects the cycle performance and high-temperature storage performance of the battery at high voltage.

### SUMMARY

The present application provides an electrolytic solution to improve the cycle performance and high-temperature storage performance of a battery at high voltage.

The present application also provides a battery including the electrolytic solution.

A first aspect of the present application provides an electrolytic solution, which includes a first lithium salt, a second lithium salt, and a first additive, the first lithium salt includes at least lithium bis(fluorosulfonyl)imide, the second lithium salt is selected from the group consisting of lithium difluoro(oxalato)borate, lithium difluorobis(oxalato)phosphate, and a combination thereof; and
the first additive is methylene methanedisulfonate.

In one possible embodiment, a molarity of the first lithium salt in the electrolytic solution ranges from 0.3 mol/L to 2 mol/L.

In one possible embodiment, the first lithium salt further includes lithium hexafluorophosphate.

In one possible embodiment, a molar ratio of lithium bis(fluorosulfonyl)imide to lithium hexafluorophosphate is (0.2-1):1.

In one possible embodiment, a mass of the second lithium salt ranges from 0.1% to 3% of a total mass of the electrolytic solution.

In one possible embodiment, the second lithium salt includes lithium difluoro(oxalato)borate and lithium difluorobis(oxalato)phosphate.

In one possible embodiment, a mass ratio of lithium difluorobis(oxalato)phosphate to lithium difluoro(oxalato)borate is 1:(0.2-4).

In one possible embodiment, a mass of the first additive ranges from 0.1% to 10% of a total mass of the electrolytic solution.

In one possible embodiment, the electrolytic solution further includes a second additive selected from at least one of vinylene carbonate, vinyl ethylene carbonate, ethylene sulfate, propylene carbonate, fluoroethylene carbonate, 1,3-propanesultone, prop-1-ene-1,3-sultone, 1,4-butanesultone, succinic anhydride, maleic anhydride, 2-methylmaleic anhydride, methyl prop-2-ynyl carbonate, tetravinylsilane, triallyl isocyanurate, hexamethylene diisocyanate, o-phenanthroline, 1,4-phenylene diisocyanate, toluene 2,4-diisocyanate, N-phenyl-bis(trifluoromethanesulfonimide), 4,4'-bi-1,3,2-dioxathiolane 2,2,2'2'-tetraoxide, phenyl methanesulfonate, 2,4,8,10-tetraoxa-3,9-dithiaspiro[5.5]undecane 3,3,9,9-tetraoxide, hydroquinone bisfluorosulfate, triallyl phosphate, tripropargyl phosphate, 2,4-butanesultone, 2-isocyanatoethyl methacrylate, tris(trimethylsilyl)borate, tris(trimethylsilyl)phosphate, tris[ethenyl(dimethyl)silyl] phosphate, 4,4'-bi-1,3-dioxolane-2,2'-dione, propyl diprop-2-ynyl phosphate, ethyl diprop-2-ynyl phosphate, (2-allylphenoxy)trimethylsilane, tetramethyl methylenediphosphonate, or 2-fluoropyridine.

In one possible embodiment, a mass of the second additive ranges from 0.1% to 5% of a total mass of the electrolytic solution.

A second aspect of the present application provides a battery, which includes any one of the electrolytic solution as described above.

The electrolytic solution provided by the present application includes the first lithium salt and the second lithium salt and further includes the first additive of methylene methanedisulfonate (MMDS). The second lithium salt helps to improve the cycling stability and high-temperature storage performance of the battery, and by being combined with the first additive, helps to improve the oxidation resistance of the second lithium salt at high voltage and further to modify the composition and structure of the SEI film, thereby reducing the impedance of the SEI film, improving the stability of the SEI film, and improving the cycle performance and high-temperature storage performance of the battery.

### DETAILED DESCRIPTION

To make the purpose, technical solution and advantages of the present application more clear, the technical solution in the embodiments of the present application will be described clearly and completely in combination with the embodiments of the present application in the following. Obviously, the described embodiments are part of the embodiments of the present application, but not the whole embodiments. Based on the embodiments in the present application, all other embodiments obtained by those of ordinary skill in the art without creative efforts fall within the protection scope of the present application.

Electrolytic solutions mainly include organic solvents and lithium salts dissolved in organic solvents. LiFSI has advantages in terms of solubility, ionic conductivity, thermal stability, etc. However, FSI anions are prone to decomposition during the preparation and purification of LiFSI, generating impurities. Meanwhile, it is difficult and costly to remove the impurities. Moreover, trace amounts of impurities will corrode the current collector at high voltage, limiting its application in batteries. Adding additives such as LiODFB and LiODFP to the electrolytic solution are helpful to inhibit the corrosion of the current collector by LiFSI, but these additives have insufficient oxidation resistance at high potential, which affects the cycle performance and high-temperature storage performance of the battery at high voltage.

To solve the above technical problem, the first aspect of the present application provides an electrolytic solution including a first lithium salt of lithium bis(fluorosulfonyl)imide and a second lithium salt with an inhibitory effect and further including a first additive of MMDS. The second lithium salt helps to improve the cycling stability and high-temperature storage performance of the battery, and by being combined with the first additive, helps to improve the oxidation resistance of the second lithium salt at high voltage and further to modify the composition and structure of the SEI film, thereby reducing the impedance of the SEI film, improving the stability of the SEI film, and improving the cycle performance and high-temperature storage performance of the battery.

In a specific embodiment, a molarity of the first lithium salt in the electrolytic solution ranges from 0.3 mol/L to 2 mol/L, i.e., each liter of the electrolytic solution includes 0.3-2 mol of the first lithium salt. Particularly, the molarity of the first lithium salt in the electrolytic solution can be selected from the group consisting of 0.3 mol/L, 0.5 mol/L, 1.0 mol/L, 1.3 mol/L, 1.5 mol/L, 1.8 mol/L, 2.0 mol/L, and any ranges therebetween.

Further, the molarity of the first lithium salt in the electrolytic solution ranges from 0.3 mol/L to 1.5 mol/L. Furthermore, the molarity of the first lithium salt in the electrolytic solution is ranges from 0.3 mol/L to 1.2 mol/L.

In a specific embodiment, the first lithium salt further includes LiPF₆. As a common used lithium salt in the art, mixing LiPF₆ with LiFSI is helpful to improve the comprehensive performance of a battery and reduce the production cost.

When the first lithium salt includes LiPF₆ and LiFSI, a molar ratio of LiPF₆ to LiFSI is 1:(0.2-1). Further, the molar ratio of LiPF₆ to LiFSI is 1:0.5. An insufficient amount of LiFSI will affect the cycle performance and high-temperature storage performance of the battery, while an excessive amount of LiFSI has limited effect on improving the performance of the battery and will increase the production cost of the battery.

In a specific embodiment, the second lithium salt is selected from the group consisting of LiODFB, LiODFP, and a combination thereof, and a mass of the second lithium salt ranges from 0.1% to 3% of a total mass of the electrolytic solution, i.e., each gram of the electrolytic solution includes 0.1 g-3 g of the second lithium salt. Particularly, the mass of the second lithium salt can be selected from the group consisting of 0.1%, 0.5%, 1.0%, 1.1%, 1.5%, 2.0%, 2.1%, 2.5%, 3.0%, and any ranges therebetween.

Further, the mass of the second lithium salt ranges from 0.2% to 2% of the total mass of the electrolytic solution. Furthermore, the mass of the second lithium salt ranges from 0.2% to 1.5% of the total mass of the electrolytic solution.

Further, the second lithium salt includes both LiODFB and LiODFP, and the synergistic effect of LiODFP and LiODFB is helpful to further improve the high-temperature storage performance and cycle performance of the battery.

Further, when the second lithium salt includes LiODFB and LiODFP, a mass ratio of LiODFP to LiODFB is 1:(0.2-4). Further, the mass ratio of LiODFP to LiODFB is 1:(0.5-2). Furthermore, the mass ratio of LiODFP to LiODFB is 1:1.

In a specific embodiment, a mass of the first additive ranges from 0.1% to 10% of the total mass of the electrolytic solution, i.e., each gram of the electrolytic solution includes 0.1%-10% of MMDS. Particularly, the mass of the first additive can be selected from the group consisting of 0.1%, 0.5%, 1.0%, 1.5%, 2.0%, 2.5%, 3.0%, 3.5%, 4.0%, 4.5%, 5.0%, 5.5%, 6.0%, 6.5%, 7.0%, 7.5%, 8.0%, 8.5%, 9.0%, 9.5%, 10.0%, and any ranges therebetween.

Further, the mass of the first additive ranges from 0.1% to 5% of the total mass of the electrolytic solution. Further, the mass of the first additive ranges from 0.1% to 3% of the total mass of the electrolytic solution. Furthermore, the mass of the first additive ranges from 0.1% to 2% of the total mass of the electrolytic solution.

In addition, according to the conventional technical means in the art, a second additive can be added to the electrolytic solution to optimize the comprehensive performance of the battery. In a specific embodiment, the second additive is selected from at least one of vinylene carbonate, vinyl ethylene carbonate, ethylene sulfate, propylene carbonate, fluoroethylene carbonate, 1,3-propanesultone, prop-1-ene-1,3-sultone, 1,4-butanesultone, succinic anhydride, maleic anhydride, 2-methylmaleic anhydride, methyl prop-2-ynyl carbonate, tetravinylsilane, triallyl isocyanurate, hexamethylene diisocyanate, o-phenanthroline, 1,4-phenylene diisocyanate, toluene 2,4-diisocyanate, N-phenyl-bis(trifluoromethanesulfonimide), 4,4'-bi-1,3,2-dioxathiolane 2,2,2'2'-tetraoxide, phenyl methanesulfonate, 2,4,8,10-tetraoxa-3,9-dithiaspiro[5.5]undecane 3,3,9,9-tetraoxide, hydroquinone bisfluorosulfate, triallyl phosphate, tripropargyl phosphate, 2,4-butanesultone, 2-isocyanatoethyl methacrylate, tris(trimethylsilyl)borate, tris(trimethylsilyl)phosphate, tris[ethenyl(dimethyl)silyl] phosphate, 4,4'-bi-1,3-dioxolane-2,2'-dione, propyl diprop-2-ynyl phosphate, ethyl diprop-2-ynyl phosphate, (2-allylphenoxy)trimethylsilane, tetramethyl methylenediphosphonate, or 2-fluoropyridine.

Further, a mass of the second additive ranges from 0.1% to 5% of the total mass of the electrolytic solution, i.e., each gram of the electrolytic solution includes 0.1%-5% of the second additive. Particularly, the mass of the second additive can be selected from the group consisting of 0.1%, 0.5%, 1.0%, 1.5%, 2.0%, 2.5%, 3.0%, 3.5%, 4.0%, 4.5%, 5.0%, and any ranges therebetween.

Further, the mass of the second additive ranges from 0.1% to 3% of the total mass of the electrolytic solution. Furthermore, the mass of the second additive ranges from 0.1% to 2% of the total mass of the electrolytic solution.

The organic solvent provided in the present application is a conventional material in the art, and the composition and content of the organic solvent can be selected by those skilled in the art according to their needs. In a specific embodiment, the organic solvent includes one or two of cyclic organic solvent and chain organic solvent. The cyclic organic solvent is selected from at least one of propylene carbonate, ethylene carbonate, or butylene carbonate, and the chain organic solvent is selected from at least of dimethyl carbonate, diethyl carbonate, methyl ethyl carbonate, methyl propyl carbonate, methyl formate, ethyl formate, methyl acetate, ethyl acetate.

The second aspect of the present application provides a battery, which includes any one of the electrolytic solutions as described above.

Based on the electrolytic solution provided in the first aspect of the present application, the battery provided by the present application has good high-temperature storage performance and cycle performance.

In a specific embodiment, in addition to the electrolytic solution provided in the first aspect of the present application, the battery also includes a positive electrode plate, a negative electrode plate and a separator, specifically:
the positive electrode plate includes a positive current collector and a positive electrode active material layer arranged on the surface of the positive current collector, the positive electrode active material layer includes a positive electrode active material, a conductive agent and a binder, the positive current collector is generally an aluminum foil, and the positive electrode active material is selected from at least one of transition metal oxides of lithium, for example, LiCoO₂, LiMn₂O₄, LiMnO₂, Li₂MnO₄, LiFePO₄, Li₁₊ₐMn₁₋ₓMₓO₂, LiCo₁₋ₓMₓO₂, LiFe₁₋ₓMₓPO₄, or Li₂Mn₁₋ₓO₄, M is selected from at least one of Ni, Co, Mn, Al, Cr, Mg, Zr, Mo, V, Ti, B, or F, 0≤a<0.2, and 0≤x<1.

The negative electrode plate includes a negative current collector and a negative electrode active material layer arranged on the surface of the negative current collector, the negative electrode active material layer includes a negative electrode active material, a conductive agent and a binder, the negative current collector is generally a copper foil, and the negative electrode active material is selected from at least one of carbonaceous materials, silicon-carbon materials, alloy materials, or lithium-containing metal composite oxides.

The selection of the conductive agent and the binder in the positive electrode active material layer and the negative electrode active material layer can be conventional materials in the art.

The separator is a well-known separator in the art that can be used in batteries and is stable to the used electrolytic solution, and can specifically include at least one of polyolefin, aromatic polyamide, polytetrafluoroethylene, or polyethersulfone. Further, the separator includes at least one of polyethylene, or polypropylene. In addition, the separator can be obtained by multiple layers of materials stacked in sequence. For example, the separator includes a polypropylene layer, a polyethylene layer and a polypropylene layer, which are sequentially stacked.

The electrolytic solution provided by the present application will be described in detail with specific examples as follows:

### Example 1

The electrolytic solution provided by this example includes an organic solvent, a first lithium salt, a second lithium salt, a first additive and a second additive, where the organic solvent includes ethylene carbonate (EC) and ethyl methyl carbonate (EMC) in a mass ratio of 3:7. The first lithium salt includes 1 mol/L LiPF₆ and 0.2 mol/L LiFSI. The second lithium salt includes 0.5% LiODFP and 0.5% LiODFB. The first additive is MMDS, the mass of which is 0.5% of the total mass of the electrolytic solution. The second additive is vinylene carbonate, the mass of which is 0.5% of the total mass of the electrolytic solution.

The preparation method of the electrolytic solution provided by this example includes: EC and EMC were mixed in a mass ratio of 3:7, and the second lithium salt, the first additive and the second additive were added in the molar concentration and mass fraction of each component after mixing, and the mixture was mixed uniformly to obtain the electrolytic solution.

The electrolytic solution formulations provided in Examples 2-16 and Comparative Examples 1-5 are substantially the same as those in Example 1, and the differences are as follows: the molar concentrations of the first lithium salt used in Examples 2-3 are different; the molar concentrations of the first lithium salts used in Examples 4-5 are different, and the second lithium salt used only includes LiODFP or LiODFB; the contents of the first lithium salt and the second lithium salt used in Examples 6-7 are different; the contents of the first additive used in Examples 8-10 are different; the mass ratios of the second lithium salts LiODFP and LiODFB in Examples 11-12 are different; Example 13 does not contain the second additive; the content of the second additive in Example 14 is different; the types of the second additives in Examples 15-16 are different; Comparative Example 1 does not contain the second lithium salt and the first additive; and Comparative Examples 2-5 contain only one of the second lithium salt and the first additive. The specific differences are listed in Table 1.

**Table 1. Composition of the electrolytic solutions provided in Examples 1-16 and Comparative Examples 1-5**

| | First lithium salt (mol/L) | Second lithium salt (wt%) | First additive (wt%) | Second additive |
|---|---|---|---|---|
| Example 1 | 1M LiPF₆+0.2M LiFSI | 0.5% LiODFP+0.5% LiODFB | 0.5 | 0.5% vinylene carbonate |
| Example 2 | 0.8M LiPF₆+0.4M LiFSI | 0.5% LiODFP+0.5% LiODFB | 0.5 | 0.5% vinylene carbonate |
| Example 3 | 0.6M LiPF₆+0.6M LiFSI | 0.5% LiODFP+0.5% LiODFB | 0.5 | 0.5% vinylene carbonate |
| Example 4 | 0.8M LiPF₆+0.4M LiFSI | 0.5% LiODFP | 0.5 | 0.5% vinylene carbonate |
| Example 5 | 0.8M LiPF₆+0.4M LiFSI | 0.5% LiODFB | 0.5 | 0.5% vinylene carbonate |
| Example 6 | 0.8M LiPF₆+0.4M LiFSI | 0.25% LiODFP+0.25% LiODFB | 0.5 | 0.5% vinylene carbonate |
| Example 7 | 0.8M LiPF₆+0.4M LiFSI | 0.8% LiODFP+0.8% LiODFB | 0.5 | 0.5% vinylene carbonate |
| Example 8 | 0.8M LiPF₆+0.4M LiFSI | 0.5% LiODFP+0.5% LiODFB | 0.2 | 0.5% vinylene carbonate |
| Example 9 | 0.8M LiPF₆+0.4M LiFSI | 0.5% LiODFP+0.5% LiODFB | 1 | 0.5% vinylene carbonate |
| Example 10 | 0.8M LiPF₆+0.4M LiFSI | 0.5% LiODFP+0.5% LiODFB | 2 | 0.5% vinylene carbonate |
| Example 11 | 0.8M LiPF₆+0.4M LiFSI | 0.2% LiODFP+0.8% LiODFB | 0.5 | 0.5% vinylene carbonate |
| Example 12 | 0.8M LiPF₆+0.4M LiFSI | 0.8% LiODFP+0.2% LiODFB | 0.5 | 0.5% vinylene carbonate |
| Example 13 | 0.8M LiPF₆+0.4M LiFSI | 0.5% LiODFP+0.5% LiODFB | 0.5 | / |
| Example 14 | 0.8M LiPF₆+0.4M LiFSI | 0.5% LiODFP+0.5% LiODFB | 0.5 | 2% vinylene carbonate |
| Example 15 | 0.8M LiPF₆+0.4M LiFSI | 0.5% LiODFP+0.5% LiODFB | 0.5 | 0.5% ethylene sulfate |
| Example 16 | 0.8M LiPF₆+0.4M LiFSI | 0.5% LiODFP+0.5% LiODFB | 0.5 | 0.5% tris (trimethylsilyl) phosphate |
| Example 17 | 1.2M LiFSI | 0.5% LiODFP+0.5% LiODFB | 0.5 | 0.5% vinylene carbonate |
| Example 18 | 1M LiPF₆+0.2M LiFSI | 0.5% LiODFP+0.5% LiODFB | 0.05 | 0.5% vinylene carbonate |
| Example 19 | 1M LiPF₆+0.2M LiFSI | 0.5% LiODFP+0.5% LiODFB | 0.5 | 0.5% vinylene carbonate |
| Example 20 | 0.2M LiPF₆+1M LiFSI | 0.5% LiODFP+0.5% LiODFB | 0.5 | 0.5% vinylene carbonate |
| Comparative Example 1 | 0.8M LiPF₆+0.4M LiFSI | / | / | 0.5% vinylene carbonate |
| Comparative Example 2 | 0.8M LiPF₆+0.4M LiFSI | / | 0.5 | 0.5% vinylene carbonate |
| Comparative Example 3 | 0.8M LiPF₆+0.4M LiFSI | 0.5% LiODFP | / | 0.5% vinylene carbonate |
| Comparative Example 4 | 0.8M LiPF₆+0.4M LiFSI | 0.5% LiODFB | / | 0.5% vinylene carbonate |
| Comparative Example 5 | 0.8M LiPF₆+0.4M LiFSI | 0.5% LiODFP+0.5% LiODFB | / | 0.5% vinylene carbonate |

Lithium-ion batteries were prepared by matching the electrolytic solutions provided in Examples 1-16 and Comparative Examples 1-5 with positive electrode plates, negative electrode plates and separators. Specifically, the positive electrode active material lithium-nickel-cobalt manganate (purchased from Zhenhua E-Chem Inc.), conductive agent carbon black, conductive agent carbon nanotube and binder polyvinylidene fluoride were dispersed in the solvent of N-methylpyrrolidone in the mass ratio of 94.5:3.5:0.5:1.5 to obtain the positive electrode active material layer slurry. The slurry of the positive electrode active material layer was evenly coated on the surface of the aluminum foil of the positive current collector, and the positive electrode plate was obtained after drying, rolling, baking, cutting and spot welding of tabs. The total thickness of the positive electrode plate was 90 µm.

The negative active material graphite (purchased from Jiangxi Zichen Technology Co., Ltd), conductive agent carbon black, binder polyvinylidene fluoride and sodium carboxymethyl cellulose were dispersed in deionized water in the mass ratio of 94.5:2:2:1.5, and evenly stirred to obtain the slurry of the negative electrode active material layer slurry. The slurry of the negative electrode active material layer was evenly coated on the surface of the negative current collector copper foil, and the negative electrode plate was obtained after drying, rolling, baking, cutting and spot welding of tabs. The total thickness of the negative electrode plate was 128 µm.

The prepared positive electrode plate, negative electrode plate and separator were stacked in sequence, the separator was placed between the positive electrode plate and negative electrode plate, and then wound to obtain a battery cell, the battery cell was placed in the outer package, and the electrolytic solution was injected into the battery cell in a glove box, and the preparation of the lithium-ion battery was completed after packaging, formation, aging and grading.

The lithium-ion batteries prepared in Examples 1-16 and Comparative Examples 1-5 were tested for normal-temperature cycle performance and high-temperature performance, and the test methods were as follows.

Test method for normal-temperature cycle performance: the battery was charged at a constant current of 1 C and constant voltage to 4.4 V at 25°C, rested for 5 minutes, and then discharged at a constant current of 1 C to 2.75 V, and the capacity retention rate was calculated after 500 cycles. The calculation method is: capacity retention rate (%) = (500th discharge capacity/first discharge capacity) × 100%.

Test method for high-temperature storage performance: the battery was charged at a constant current of 1 C and constant voltage to 4.4 V at 25°C, the initial thickness of the lithium-ion battery at this time was measured, then the battery was stored at 60°C for 15 days, and the thickness of the lithium-ion battery was measured. The swelling rate of the battery was calculated according to the formula: swelling rate (%) = (thickness after storage-initial thickness)/initial thickness × 100%.

Test method for high-temperature cycle performance: the lithium-ion battery stored at high temperature was discharged at 1 C to 2.75 V, and the capacity retention rate of the battery was measured and calculated. The calculation formula is as follows: capacity retention rate (%) = retention capacity/initial capacity × 100%.

The test results are shown in Table 2.

**Table 2. Performance test results of lithium-ion batteries prepared in Examples 1-16 and Comparative Examples 1-5**

| | Capacity retention rate (%) after 500 cycles at normal temperature | Capacity retention rate (%) after 15 days of storage at 60°C | Swelling rate (%) after 15 days of storage at 60°C |
|---|---|---|---|
| Example 1 | 95.4 | 91.4 | 3.5 |
| Example 2 | 97.2 | 92.4 | 3.5 |
| Example 3 | 97.4 | 92.8 | 3.4 |
| Example 4 | 95.8 | 90.8 | 4.0 |
| Example 5 | 95.5 | 90.6 | 4.2 |
| Example 6 | 96.1 | 91.3 | 3.8 |
| Example 7 | 95.2 | 91.6 | 3.5 |
| Example 8 | 95.5 | 91.8 | 3.6 |
| Example 9 | 96.0 | 89.1 | 3.8 |
| Example 10 | 95.0 | 88.4 | 4.0 |
| Example 11 | 96.5 | 91.8 | 3.8 |
| Example 12 | 96.8 | 91.9 | 3.7 |
| Example 13 | 96.8 | 92.0 | 3.6 |
| Example 14 | 95.8 | 92.4 | 3.5 |
| Example 15 | 95.8 | 92.4 | 3.5 |
| Example 16 | 97.1 | 91.9 | 3.5 |
| Example 17 | 95.0 | 91.4 | 3.8 |
| Example 18 | 94.2 | 91.1 | 4.0 |
| Example 19 | 94.7 | 91.4 | 4.1 |
| Example 20 | 95.1 | 91.5 | 3.8 |
| Comparative Example 1 | 87.8 | 82.4 | 3.3 |
| Comparative Example 2 | 92.5 | 88.9 | 2.7 |
| Comparative Example 3 | 93.1 | 89.5 | 4.2 |
| Comparative Example 4 | 93.5 | 89.6 | 4.1 |
| Comparative Example 5 | 94.0 | 90.8 | 3.9 |

According to Table 2, compared with Comparative Example 1, the addition of the second lithium salt or the first additive to the electrolytic solution helps to improve the normal-temperature cycle performance of lithium-ion batteries, and the addition effect of the second lithium salt is better than that of the first additive, but the high-temperature performance of lithium-ion batteries containing the second lithium salt is poor. Compared with Comparative Examples 1-6, the electrolytic solution provided by Examples 1-16 includes both the second lithium salt and the first additive, which is helpful to improve the normal-temperature cycle performance and high-temperature performance of lithium-ion batteries.

According to Examples 1-3, under the condition that the total molar concentration of the first lithium salt remains unchanged, the normal-temperature cycle performance and high-temperature storage performance of the lithium-ion battery are improved with the increase of the molar concentration of LiFSI, but when the molar concentration of LiFSI reaches 0.6 M, the performance improvement ratio of the lithium-ion battery is limited, while the preparation cost of the battery increases. Therefore, the molar concentration of LiFSI is preferably 0.4 mol/L. According to Examples 4-6, when the second lithium salt includes LiODFP and LiODFB at the same time, the effect of improving the performance of the battery is obviously better than that of adding only one second lithium salt. According to Examples 2 and 6-7, with the increase of the content of the second lithium salt, the normal-temperature cycle performance and high-temperature cycle performance of the lithium-ion battery are improved, but when the content is higher than 1.6%, the normal-temperature cycle performance and high-temperature performance of the lithium-ion battery are both decreased, so the content of the second lithium salt is preferably 1%. According to Examples 2 and 8-10, with the increase of the content of the first additive, the normal-temperature cycle performance and the high-temperature storage performance of the lithium-ion battery are improved, but when the content of the first additive reaches 1%, the performance of the lithium-ion battery is decreased, so the content of the first additive is preferably 0.5%. According to Examples 11-12, when the mass ratio of the second lithium salts, LiODFP to LiODFB, is 1:1, the cycle performance at normal-temperature and high-temperature storage performance of the battery are better. According to Examples 2 and 13-14, the second additive is helpful to improve the normal-temperature cycle performance of lithium-ion batteries, but when the content is more than 2%, it is not conducive to the improvement of the normal-temperature cycle performance of batteries, so the content of the second additive is preferably 0.1%-2%, and further preferably 0.5%, According to Examples 15-16, different second additives have different effects on the normal- temperature cycle performance of the battery, among which vinylene carbonate has the best effect.

Finally, it should be explained that the above examples are only used to illustrate the technical solution of the present application, but not to limit it. Although the present application has been described in detail with reference to the foregoing examples, it should be understood by those skilled in the art that the technical solution described in the foregoing examples can still be modified, and some or all of its technical features can be replaced by equivalents; however, these modifications or substitutions do not make the essence of the corresponding technical solutions deviate from the scope of the technical solutions of various examples of the present application.

## Claims

1. An electrolytic solution, comprising a first lithium salt, a second lithium salt, and a first additive, the first lithium salt comprises at least lithium bis(fluorosulfonyl)imide, and the second lithium salt is selected from the group consisting of lithium difluoro(oxalato)borate, lithium difluorobis(oxalato)phosphate, and a combination thereof; and
the first additive is methylene methanedisulfonate.

2. The electrolytic solution according to claim 1, wherein a molarity of the first lithium salt in the electrolytic solution ranges from 0.3 mol/L to 2 mol/L.

3. The electrolytic solution according to claim 1 or 2, wherein the first lithium salt further comprises lithium hexafluorophosphate.

4. The electrolytic solution according to claim 3, wherein a molar ratio of lithium bis(fluorosulfonyl)imide to lithium hexafluorophosphate is (0.2-1):1.

5. The electrolytic solution according to claim 1, wherein a mass of the second lithium salt ranges from 0.1% to 3% of a total mass of the electrolytic solution.

6. The electrolytic solution according to claim 1 or 5, wherein the second lithium salt further comprises lithium difluoro(oxalato)borate and lithium difluorobis(oxalato)phosphate.

7. The electrolytic solution according to claim 6, wherein a mass ratio of lithium difluorobis(oxalato)phosphate to lithium difluoro(oxalato)borate is 1:(0.2-4).

8. The electrolytic solution according to claim 1, wherein a mass of the first additive ranges from 0.1% to 10% of a total mass of the electrolytic solution.

9. The electrolytic solution according to claim 1, wherein the electrolytic solution further comprises a second additive selected from at least one of vinylene carbonate, vinyl ethylene carbonate, ethylene sulfate, propylene carbonate, fluoroethylene carbonate, 1,3-propanesultone, prop-1-ene-1,3-sultone, 1,4-butanesultone, succinic anhydride, maleic anhydride, 2-methylmaleic anhydride, methyl prop-2-ynyl carbonate, tetravinylsilane, triallyl isocyanurate, hexamethylene diisocyanate, o-phenanthroline, 1,4-phenylene diisocyanate, toluene 2,4-diisocyanate, N-phenyl-bis(trifluoromethanesulfonimide), 4,4'-bi-1,3,2-dioxathiolane 2,2,2'2'-tetraoxide, phenyl methanesulfonate, 2,4,8,10-tetraoxa-3,9-dithiaspiro[5.5]undecane 3,3,9,9-tetraoxide, hydroquinone bisfluorosulfate, triallyl phosphate, tripropargyl phosphate, 2,4-butanesultone, 2-isocyanatoethyl methacrylate, tris(trimethylsilyl)borate, tris(trimethylsilyl)phosphate, tris[ethenyl(dimethyl)silyl] phosphate, 4,4'-bi-1,3-dioxolane-2,2'-dione, propyl diprop-2-ynyl phosphate, ethyl diprop-2-ynyl phosphate, (2-allylphenoxy)trimethylsilane, tetramethyl methylenediphosphonate, or 2-fluoropyridine.

10. The electrolytic solution according to claim 9, wherein a mass of the second additive ranges from 0.1% to 5% of a total mass of the electrolytic solution.

11. A battery comprising the electrolytic solution according to any one of claims 1-10.
